# EUROPÄISCHE PATENTSCHRIFT

(11) **EP 2 310 106 B1**
(45) Veröffentlichungstag und Bekanntmachung des Hinweises auf die Patenterteilung: **05.03.2014**
(21) Anmeldenummer: 09769357.6
(22) Anmeldetag: 26.06.2009
(51) Int. Cl.: B01D 35/147, B01D 35/153

(54) **VORRICHTUNG ZUR BEHANDLUNG VON WASSER, INSBESONDERE FILTERVORRICHTUNG, UND KARTUSCHE**
APPARATUS FOR TREATING WATER, PARTICULARLY FILTER APPARATUS, AND CARTRIDGE
DISPOSITIF DE TRAITEMENT D'EAU, EN PARTICULIER DISPOSITIF DE FILTRATION, ET CARTOUCHE

(30) Priorität: 27.06.2008 DE 102008002727
(43) Veröffentlichungstag der Anmeldung: 20.04.2011
(73) Patentinhaber: Brita GmbH, 65232 Taunusstein (DE)
(72) Erfinder: FREYSTEDT, Bernd, 65187 Wiesbaden (DE); NAMUR, Marc, 64297 Darmstadt (DE)
(74) Vertreter: Mehler Achler
(86) Internationale Anmeldenummer: PCT/EP2009/058053
(87) Internationale Veröffentlichungsnummer: WO 2009/156509

(56) Entgegenhaltungen:
- US-A- 4 077 876
- US-A- 4 204 965
- US-A- 5 645 720
- US-A- 5 653 871

## Beschreibung

Die Erfindung betrifft eine Vorrichtung zur Behandlung von Wasser, mit einer Kartusche, die einen Behälter zur Aufnahme von Behandlungsmittel und einen Anschlusskopf aufweist, der mindestens eine Eintrittsöffnung und mindestens eine Austrittsöffnung aufweist und mit einer Anschlusseinrichtung, die versehen ist mit einer Aufnahme für den Anschlusskopf, die mindestens eine Zuflussöffnung und mindestens eine Abflussöffnung aufweist, eine Ventileinrichtung zum Öffnen und Schließen der Zuflussöffnung und eine Verriegelungseinrichtung zum lösbaren Befestigen der Kartusche an der Anschlusseinrichtung.

Unter der Behandlung von Wasser wird außer der Filtration auch die dosierte Abgabe von Stoffen an das Wasser verstanden. Die Abgabe von Stoffen kann auch mit einer Filtration des Wassers kombiniert sein.

Unter Filterkartuschen werden zum einen solche verstanden, die ein siebartiges Gebilde zur mechanischen Filtration aufweisen. Zum anderen werden unter Filterkartuschen solche verstanden, die außer einem siebartigen Gebilde mindestens ein Filtermedium, zum Beispiel in Granulatform, enthalten, das zur chemischen und/oder mechanischen Entfernung und/oder Verminderung von organischen und/oder anorganischen Verunreinigungen dient. Derart ausgestattete Filterkartuschen ermöglichen somit eine nicht-mechanische Filtration, die mit einer mechanischen Filtration kombiniert sein kann. Diese Filterkartuschen werden zur Optimierung von Wasser eingesetzt, wobei unter Optimierung die mechanische und/oder nicht-mechanische Filtration verstanden wird. Hierzu zählt z.B. die Enthärtung und Entkalkung von Trinkwasser.

Die Filtration kann druckgetrieben, d.h. mit Überdruck, oder mit Unterdruck oder schwerkraftgetrieben durchgeführt werden.

Aus der WO 2007/012079 A2 ist eine Filtervorrichtung bekannt, die eine Filterkartusche und eine Anschlusseinrichtung aufweist. Die Anschlusseinrichtung ist in der Regel fest montiert. Die Filterkartusche wird in diese Anschlusseinrichtung eingesteckt und nach dem Verbrauch des Filtermaterials gegen eine neue Filterkartusche ausgetauscht. Der Einsteckvorgang belastet die Dichtungen an dem Anschlusskopf der Filterkartusche und/oder der Aufnahme der Anschlusseinrichtung, insbesondere wenn der Einsteckvorgang mit einer Rotationsbewegung der Filterkartusche verbunden ist.

Zur Vermeidung von Rotationsbewegungen wird eine am Behälter der Kartusche angreifende Verriegelungseinrichtung vorgeschlagen, bei der sowohl für den Einbau als auch für den Ausbau der Filterkartuschen lediglich eine translatorische Bewegung der Filterkartusche erforderlich ist. Dies bedingt eine aufwändige, nach dem Prinzip des Kugelschreibers funktionierende Verriegelungseinrichtung, wobei die Federeinrichtung der Verriegelungseinrichtung derart ausgebildet und angeordnet sein muss, dass wenigstens eines der Bauteile der Verriegelungseinrichtung eine Rotationsbewegung ausführt.

Die Wassereintrittsöffnung der Filterkartusche ist an der Stirnseite des Anschlusskopfes vorgesehen, so dass das Einsetzen der Filterkartusche entgegen der Strömungsrichtung des ungefilterten Wassers und somit gegen den Wasserdruck erfolgen muss. Im Betrieb der Filterkartusche wirkt ständig der Wasserdruck auf die Filterkartusche ein und drückt diese aus der Aufnahme heraus. Um dies zu verhindern und die Filterkartusche dennoch sicher und unverrückbar in der Aufnahme zu fixieren, ist eine stabile Ausführung der Verriegelungseinrichtung unerlässlich. Um Tropfverluste bei der Demontage der Filterkartusche zu vermeiden, sind eine aufwändige Ventilkonstruktion sowie eine Vielzahl von Dichtelementen erforderlich.

Die US 4,077,876 A offenbart eine Anschlussvorrichtung für eine Filterkartusche, wobei die Filterkartusche einen Behälter zur Aufnahme von Behandlungsmitteln und einen Anschlusskopf umfasst. Beim Einsetzen der Filterkartusche wird ein Ventilelement durch den Anschlusskopf vom Ventilsitz gegen die Kraft einer Feder gelöst, so dass die zu behandelnde Flüssigkeit in die Filterkartusche einströmen kann. Die behandelte Flüssigkeit strömt durch eine in der Stirnfläche des Anschlusskopfes befindliche Auslassöffnung in das Ventilelement ein, in dem ein Kugelventil angeordnet ist.

Die US 5,653,871 A offenbart eine Anschlussvorrichtung für eine Filterkartusche.

Aufgabe der Erfindung ist es, eine Vorrichtung zur Behandlung von Wasser bereitzustellen, die mit wenigen Bauteilen auskommt, einen sicheren und dichten Sitz der Filterkartusche gewährleistet und die einen einfachen Austausch der Kartusche ermöglicht.

Diese Aufgabe wird mit den Merkmalen des Patentanspruchs 1 gelöst.

Durch die Verlegung von Zufluss- und Abflussöffnung in mindestens eine Seitenwand des Anschlusskopfes wirkt der Druck des in die Kartusche strömenden unbehandelten Wassers senkrecht zur Längsachse der Kartusche und somit senkrecht zur Einsteckrichtung, so dass die Kartusche im Betrieb nicht durch den Wasserdruck aus ihrer Position herausgedrückt werden kann.

Die Eintritts- und Austrittsöffnungen, die mit den Zufluss- und Abflussöffnungen in der Aufnahme zusammenwirken, sind ebenfalls in einer Seitenfläche des Anschlusskopfes angeordnet.

Diese Maßnahme eröffnet die Möglichkeit einer Vereinfachung der Ventileinrichtung gegenüber dem oben genannten Stand der Technik. Durch die Bereitstellung eines den Anschlusskopf mindestens teilweise umgreifenden Ventilelementes, das in der Aufnahme beweglich angeordnet ist, wird die Aufnahme zur Führung des Ventilelementes mitgenutzt. Die Kosten für die Herstellung der Vorrichtung werden dadurch erheblich verringert.

Das Ventilelement wird beim Einstecken des Anschlusskopfes von diesem aus seiner Ruhe- in eine Arbeitsposition verschoben.

In der Ruheposition verschließt das Ventilelement wenigstens die Zuflussöffnung. Beim Einstecken des Anschlusskopfes wird nicht nur das Ventilelement sondern auch der Anschlusskopf relativ zum Ventilelement verschoben bis sowohl der Anschlusskopf als auch das Ventilelement die jeweilige Endposition erreicht hat.

In dieser Endposition befindet sich das Ventilelement in seiner Arbeitsposition, in der es sowohl die Zuflussöffnung als auch die der Zuflussöffnung gegenüberliegende Eintrittsöffnung freigibt, so dass das zu behandelnde Wasser in den Anschlusskopf und somit in die Kartusche einströmen kann.

Beim Einstecken des Anschlusskopfes werden auch die Austrittsöffnung und die Abflussöffnung zur Deckung gebracht. Dies kann ohne Beteiligung des Ventilelementes erfolgen. Es ist jedoch bevorzugt, dass das Ventilelement derart ausgebildet ist, dass es in gleicher Weise wie bei der Zuflussöffnung die Austrittsöffnung bzw. die Abflussöffnung öffnet und verschließt.

Das Ventilelement ist in der Aufnahme beweglich angeordnet. Vorzugsweise ist das Ventilelement mindestens in axialer Richtung, d. h. in Richtung der Längsachse der Filterkartusche bzw. der Anschlusseinrichtung beweglich. Unter dieser axialen Beweglichkeit wird ein Verschieben ohne Drehkomponente verstanden.

Das Ventilelement kann zum Öffnen und Schließen der Zuflussöffnung aus dem Bereich der Zuflussöffnung heraus bzw. in den Bereich der Zuflussöffnung hinein bewegt werden. Es ist vorgesehen, dass das Ventilelement mindestens eine Ausnehmung oder mindestens eine Öffnung aufweist, die zur Freigabe der Zuflussöffnung vor die Zuflussöffnung bewegt wird. Eine weitere Ausnehmung und/oder Öffnung kann für die Abflussöffnung vorgesehen sein.

Vorzugsweise ist das Ventilelement zwischen mindestens einer Seitenwand der Aufnahme und dem Anschlusskopf angeordnet. Das Ventilelement liegt an der Seitenwand der Aufnahme an und ist vorzugsweise an der Seitenwand beweglich angeordnet. In welcher Weise das Ventilelement beweglich angeordnet sein kann, richtet sich im Wesentlichen nach dem Bewegungsablauf des Einsteckvorgangs.

Das Ventilelement ist daher vorzugsweise in Richtung der Längsachse der Aufnahme verschiebbar und/oder drehbar gelagert. Unter drehbarer Lagerung wird eine Drehbewegung um die Längsachse der Aufnahme verstanden. Die Längsachse der Aufnahme fällt mit der Einsteckrichtung des Anschlusskopfes zusammen.

Es ist gemäß einer Ausführungsform vorgesehen, dass der Anschlusskopf in axialer Richtung in das Ventilelement eingesteckt und in axialer Richtung mit dem Ventilelement bis zur Endstellung des Ventilelements axial bewegt wird. In der Endstellung erfolgt eine Festlegung des Anschlusskopfes, insbesondere eine Verriegelung. Zur Entriegelung wird eine Drehbewegung von Filterkartusche und Ventilelement durchgeführt. Diese Ausführung wird als push-turn-Ausführung bezeichnet.

Gemäß der zweiten Ausführung erfolgt die Entriegelung ebenfalls durch eine axiale Bewegung der Filterkartusche und des Ventilelements in entgegengesetzter Richtung wie beim Einstecken, sogenannte pushpull-Ausführung.

Vorzugsweise ist das Ventilelement ein plattenförmiges Element, ein schalenförmiges Element oder eine Hülse. Die Ausgestaltung des Ventilelementes richtet sich im Wesentlichen nach der Außenkontur des Anschlusskopfes und der Innenkontur der Aufnahme. Dementsprechend kann die Außenkontur im Falle einer Hülse beispielsweise rund oder eckig ausgebildet sein.

Die Aufnahme und/oder der Anschlusskopf weisen vorzugsweise einen rechteckigen oder trapezförmigen Querschnitt auf, was im Unterschied zu runden Querschnitten die richtige Positionierung des Anschlusskopfes in der Aufnahme erleichtert. Die rechteckigen bzw. trapezförmigen Querschnittskonturen werden in komplementärer Weise an dem Ventilelement verwirklicht.

Andere Querschnitte wie z. B. Kreisbögen mit geraden Abschnitten sind ebenfalls bevorzugt.

Vorzugsweise weist das Ventilelement an der der Stirnwand der Aufnahme zugewandten Seite einen Boden auf. Der Boden kann als Angriffsfläche für eine Betätigungseinrichtung, insbesondere eine Federeinrichtung dienen, um das Ventilelement in seine Ruheposition zu bewegen. Wenn das Ventilelement als Hülse ausgebildet ist, wird dem Ventilelement durch den Boden eine becher- oder topfförmige Gestalt verliehen.

Das Ventil weist in oder unter dem Boden vorzugsweise einen Durchgangskanal auf, der sich insbesondere senkrecht zur Längsachse erstreckt. Wenn die Anschlusseinrichtung z.B. an eine Wasserpumpe angeschlossen ist, die kontinuierlich Wasser fördert, ist es von Vorteil, wenn die Pumpe beim Austausch der Kartusche nicht abgeschaltet werden muss. Um den Wasserfluss aufrechterhalten zu können, ist der Durchgangskanal vorgesehen, der in der Ruheposition des Ventilelementes die Zuflussöffnung mit der Abflussöffnung verbindet. Es wird dadurch ein Bypass geschaffen, über den das Wasser unbehandelt weitergeleitet wird.

Die Eintrittsöffnung und die Austrittsöffnung des Anschlusskopfes sind vorzugsweise auf gegenüberliegenden Seiten angeordnet. Die dazugehörigen Zufluss- und Abflussöffnungen der Aufnahme sind ebenfalls gegenüberliegend platziert. Der Durchgangskanal kann in dieser Ausführungsform als gerade Durchgangsbohrung im Boden des Ventilelementes ausgeführt werden.

Die Verriegelungseinrichtung weist vorzugsweise eine Federeinrichtung auf, die zwischen der Aufnahme und dem Ventilelement angeordnet ist. Die Federeinrichtung wirkt somit auch auf das Ventilelement ein und kann zum Bewegen des Ventilelementes genutzt werden, insbesondere um das Ventilelement in seine Ruheposition zu bewegen oder das Ventilelement in seiner Ruheposition zu halten.

Die Federeinrichtung ist vorzugsweise eine Druckfeder.

Zwei verschiedene Ausführungsformen der Druckfeder sind bevorzugt.

Gemäß einer ersten Ausführungsform ist die Druckfeder zwischen der Stirnwand der Aufnahme und dem Ventilelement angeordnet. Die Druckfeder wirkt in Richtung der Längsachse der Aufnahme und verschiebt das Ventilelement. Wenn das Ventilelement vorzugsweise einen Boden aufweist, kann die Druckfeder an diesem Boden angreifen.

Eine bevorzugte Ausführungsform der Druckfeder ist eine Schraubenfeder. Die Druckfeder kann zusätzlich auch als Torsionsfeder ausgebildet sein. Die Ausbildung der Druckfeder als Torsionsfeder ist vorteilhaft, wenn das Ventilelement drehbar in der Aufnahme gelagert ist und die Entriegelung durch eine Rotationsbewegung erfolgt.

Anstelle einer kombinierten Druck- und Torsionsfeder können auch zwei Federn, nämlich eine Druckfeder und eine Torsionsfeder vorgesehen sein.

Die Druckfeder, die Torsionsfeder oder die kombinierte Druck- und Torsionsfeder können auch in einem mittleren Bereich der Aufnahme angeordnet sein. Diese Feder umgreift vorzugsweise das Ventilelement, was vorteilhafterweise die Baulänge der Anschlusseinreichtung verkürzt.

Gemäß einer weiteren Ausführungsform ist die Druckfeder zwischen einer Seitenwand der Aufnahme und dem Ventilelement angeordnet. Die Druckfeder wirkt senkrecht zur Längsachse der Aufnahme auf das Ventilelement ein und fixiert dadurch das Ventilelement in der gewünschten Position.

Die Druckfeder ist vorzugsweise in einer Seitenwand der Aufnahme gelagert.

Gemäß einer besonderen Ausführungsform ist die Druckfeder als Blattfeder ausgebildet. Die Blattfeder weist vorzugsweise einen V-förmigen Abschnitt auf, wobei dieser V-förmige Abschnitt das Ventilelement kontaktiert.

Das Ventilelement weist in seiner Außenfläche mindestens zwei benachbarte Ausnehmungen zum Eingreifen der Blattfeder auf. Durch die zwei Ausnehmungen werden zwei Raststellungen verwirklicht, so dass das Ventilelement in seiner Ruhestellung und in seiner Arbeitsstellung fixiert werden kann. Beim Verschieben des Ventilelementes in Richtung der Längsachse der Aufnahme, wird die Blattfeder aus der Ausnehmung herausgedrückt und dadurch vorgespannt. Wenn die benachbarte Ausnehmung von dem vorzugsweise V-förmigen Abschnitt erreicht wird, greift die Blattfeder in diese Ausnehmung ein und fixiert das Ventilelement in der betreffenden Position.

Die Verriegelungseinrichtung weist mindestens ein Verriegelungselement auf, das am Anschlusskopf angreift. Durch das Angreifen am Anschlusskopf wird die Verriegelungseinrichtung besonders kompakt ausgestaltet.

Damit das Verriegelungselement am Anschlusskopf angreifen kann, ist vorzugsweise eine Ausnehmung und/oder eine Nase am Anschlusskopf vorgesehen. Nach dem Einstecken des Anschlusskopfes greift das mindestens eine Verriegelungselement in diese Ausnehmung ein oder an der Nase an.

Gemäß einer ersten Ausführungsform der Verriegelungseinrichtung ist das Verriegelungselement derart ausgebildet, dass es bei einer translatorischen Einsteckbewegung des Anschlusskopfes verriegelt und bei einer Drehbewegung des Anschlusskopfes entriegelt.

Das Verriegelungselement ist gemäß einer besonderen Ausführungsform eine Sperrklinke. Die Sperrklinke kann in einer Seitenwand der Aufnahme angeordnet sein. Die Sperrklinke ist vorzugsweise parallel zur Längsachse der Aufnahme ausgerichtet.

Beim translatorischen Einfahren des Anschlusskopfes rastet die Sperrklinke in die Ausnehmung oder an der Nase ein. Durch eine Drehbewegung rutscht die Sperrklinke aus der Ausnehmung heraus bzw. an der Nase vorbei, wodurch die Verriegelung aufgehoben wird.

Gemäß einer zweiten Ausführungsform ist das Verriegelungselement derart ausgebildet, dass es bei einer translatorischen Einsteckbewegung des Anschlusskopfes verriegelt und bei einer entgegengesetzt gerichteten translatorischen Bewegung zum Entfernen des Anschlusskopfes entriegelt.

Das Verriegelungselement ist vorzugsweise ein Federstab mit einem Rastkopf.

Der Federstab kann an der Außenseite des Ventilelementes angeordnet sein. Bei einer Bewegung des Ventilelementes wird das Verriegelungselement mitbewegt. Das Ventilelement ist bei dieser Ausführungsform Bestandteil der Verriegelungseinrichtung.

Der Rastkopf erstreckt sich durch das Ventilelement vorzugsweise nach innen, um an der Nase bzw. der Ausnehmung des Anschlusskopfes angreifen zu können.

Der Federstab mit dem Rastkopf ist vorzugsweise in einer Kulisse geführt, die in einer Seitenwand der Aufnahme vorgesehen ist. Durch die Bewegung des Ventilelementes wird das Verriegelungselement relativ zur Aufnahme und somit relativ zu Seitenwand der Aufnahme bewegt. Mittels der Kulisse kann die Bewegung des Rastkopfes senkrecht zur Verschieberichtung, die in Richtung der Längsachse erfolgt, gezielt gesteuert werden. Dadurch ist es möglich, das Eingreifen des Rastkopfes z. B. in die Ausnehmung sowie das Lösen des Rastkopfes zum Entriegeln gezielt zu steuern.

Der Anschlusskopf kann außerdem mindestens ein Führungsmittel aufweisen, das mit einem korrespondierenden Führungsmittel im Inneren der Hülse zusammenwirkt. Solche Führungsmittel können ein Steg und eine Nut oder dergleichen sein, wodurch die Positionierung des Anschlusskopfes relativ zur Anschlusseinrichtung in eindeutiger Weise definiert werden kann. Solche Führungsmittel können auch nach dem Schlüssel-Schloss-Prinzip ausgeführt sein, so dass nur speziell hierfür vorgesehene Kartuschen mit der betreffenden Anschlusseinrichtung verbunden werden können.

Die Kartusche weist einen Behälter zur Aufnahme von Behandlungsmittel für Wasser und einen auf dem Behälter angeordneten Anschlusskopf zum Verbinden mit einer Anschlusseinrichtung auf, wobei der Anschlusskopf an mindestens einer Seitenfläche mindestens einer Eintrittsöffnung und mindestens einer Austrittsöffnung und mindestens einer Ausnehmung und/oder Nase für das Eingreifen eines Verriegelungselementes einer Verriegelungseinrichtung der Anschlusseinrichtung aufweist.

Vorzugsweise weist der Anschlusskopf mindestens ein zusätzliches Führungsmittel auf.

Derartige Vorrichtungen finden bevorzugt Verwendung in Kühlschränken. Großvolumige Kühlschränke können mit einer Zapfstelle versehen sein, so dass innerhalb des Kühlschrankes gekühltes und beispielsweise gefiltertes Wasser entnommen werden kann. Die Anschlusseinrichtung ist somit fest im Innenraum des Kühlschrankes installiert und beispielsweise an die Hauswasserleitung angeschlossen.

Zwei beispielhafte Ausführungsformen der Erfindung werden nachfolgend anhand der Zeichnungen näher erläutert.

Es zeigen:
- Fig. 1: eine perspektivische Darstellung einer Vorrichtung zur Behandlung von Wasser mit einer Kartusche und einer Anschlusseinrichtung, gesehen von der Kartuschenseite,
- Fig. 2: eine perspektivische Darstellung entsprechend Figur 1, gesehen von der Anschlussseite,
- Fig. 3: eine vergrößerte Teildarstellung des linken Endes der in Fig. 1 gezeigten Vorrichtung gemäß einer ersten Ausführungsform zu Beginn des Einsteckens des Anschlusskopfes in die Anschlusseinrichtung,
- Fig. 4: eine Darstellung gesehen auf das rechte Ende der Vorrichtung gemäß Fig. 2, wobei der Anschlusskopf vollständig in die Anschlusseinrichtung eingesteckt ist,
- Fig. 5a: einen Längsschnitt in der Ebene V - V der Figuren 1 und 3 durch den Anschlusskopf mit Ventileinrichtung bei funktionslosem Betrieb zum Austausch der Kartusche,
- Fig. 5b: ein Längsschnitt entsprechend der Fig. 5a gemäß einer weiteren Ausführungsform,
- Fig. 5c: ein Längsschnitt entsprechend der Fig. 5a gemäß einer weiteren Ausführungsform,
- Fig. 6: einen Längsschnitt durch den Anschlusskopf mit Ventileinrichtung gemäß Figur 5 bei Filterbetrieb,
- Fig. 7: in Perspektive die Verriegelungseinrichtung für den Anschlusskopf mit der Ventileinrichtung im verriegelten Zustand,
- Fig. 8: eine Darstellung wie in Figur 7, jedoch im nicht verriegelten Zustand,
- Fig. 9: eine vergrößerte Teildarstellung der in Fig. 1 gezeigten Vorrichtung gemäß einer zweiten Ausführungsform zu Beginn des Einsteckens des Anschlusskopfes in die Anschlusseinrichtung,
- Fig. 10: eine Teildarstellung der Vorrichtung gemäß Fig. 9, wobei der Anschlusskopf weiter eingesteckt ist, aber noch nicht seine Endposition erreicht hat,
- Fig. 11: eine Darstellung der Vorrichtung gemäß der Figuren 9 und 10, wobei der Anschlusskopf vollständig eingesteckt ist.

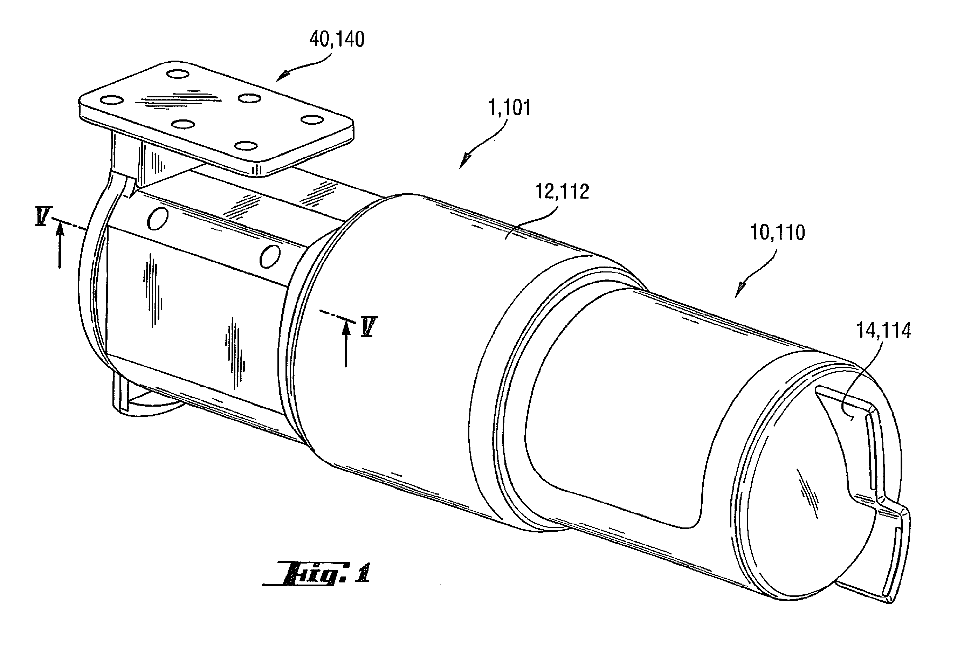

In der Fig. 1 ist perspektivisch eine Vorrichtung 1, 101 zur Behandlung von Wasser dargestellt, die eine Anschlusseinrichtung 40, 140 und eine mit der Anschlusseinrichtung 40, 140 verbundene Kartusche 10, 110 aufweist.

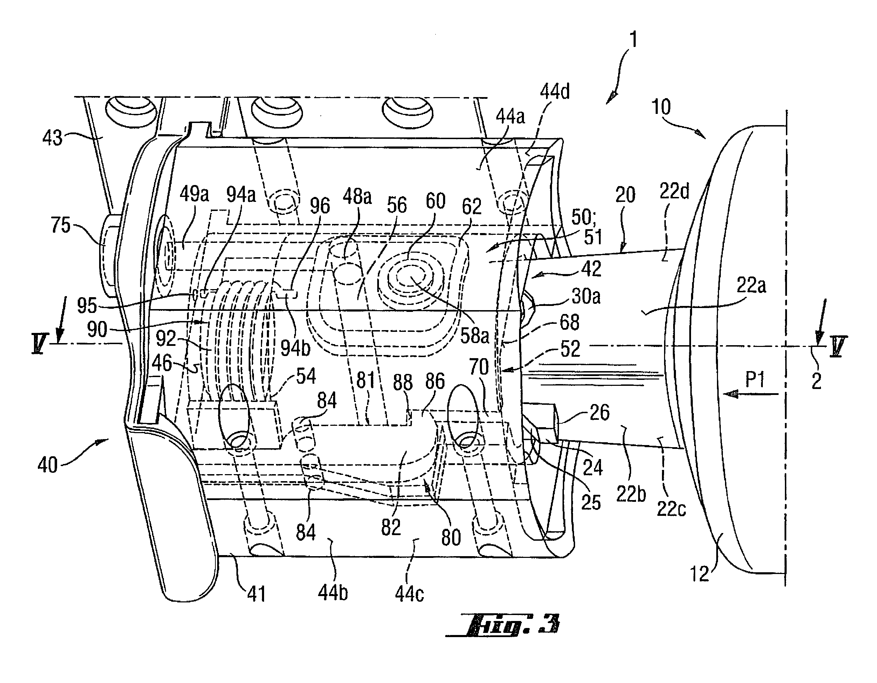

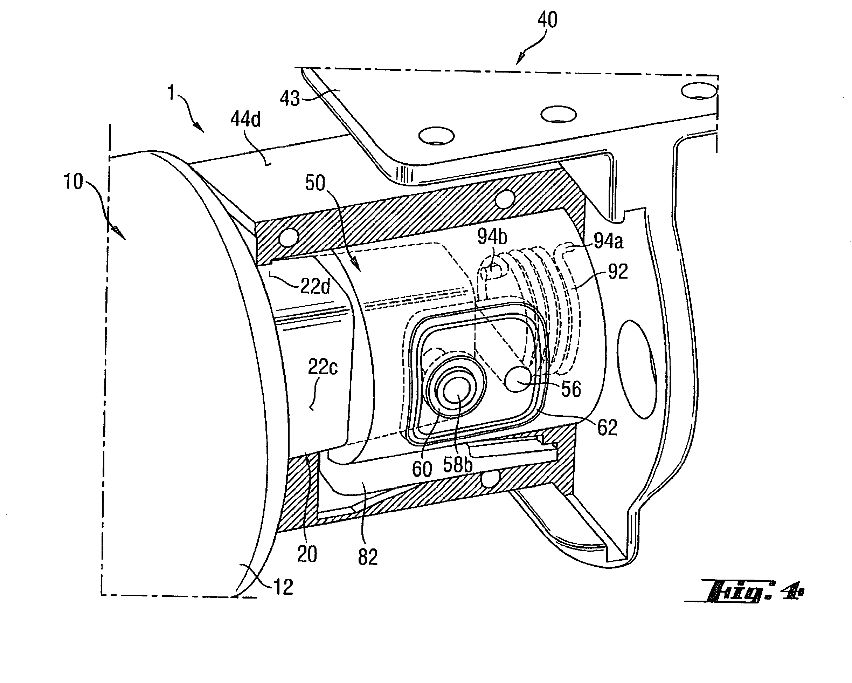

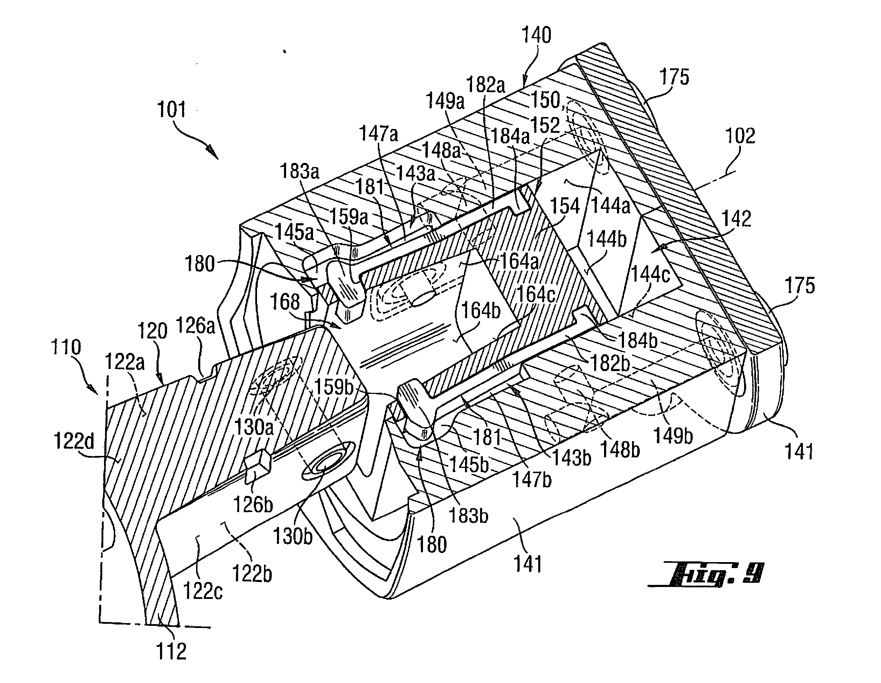

Mit 1 wir die Vorrichtung gemäß der ersten Ausführungsform entsprechend der Figuren 3 bis 8 und mit 101 die Vorrichtung gemäß der Ausführungsform gemäß der Figuren 9 bis 11 bezeichnet. Gleiches gilt für die übrigen 1- und 2- bzw. 3-stelligen Bezugszeichen.

Die Kartusche 10, 110 besitzt einen Behälter 12, 112 zur Aufnahme eines Behandlungsmittels von Wasser, das über die Anschlusseinrichtung 40, 140 der Kartusche 10, 110 zugeführt wird. Das behandelte Wasser wird ebenfalls über die Anschlusseinrichtung 40, 140 abgeführt. Die Kartusche 10, 110 kann beispielsweise eine Filterkartusche sein.

Die Anschlusseinrichtung 40, 140 ist über eine Montageplatte 43 ortsfest montiert, beispielsweise in einem Kühlschrank.

Die Kartusche 10, 110 muss nach dem Verbrauch des in ihr befindlichen Behandlungsmittels ausgetauscht werden. Um diesen Vorgang zu erleichtern, besitzt der Behälter 12, 112 am rückwärtigen Ende ein Griffstück 14, 114, mit dem die Kartusche 10, 110 erfasst und je nach Ausgestaltung der Anschlusseinrichtung 40, 140 gedreht werden kann.

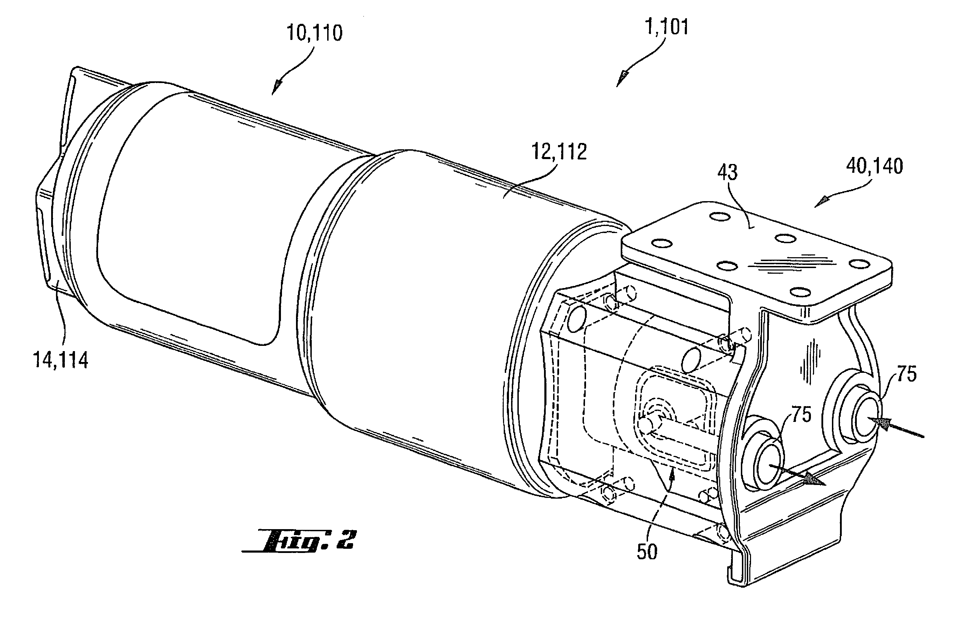

In der Fig. 2 ist die Vorrichtung 1, 101 gemäß der Fig. 1 von der Anschlussseite perspektivisch dargestellt, so dass die beiden Anschlussarmaturen 75 für die Zuführung von zu behandelndem Wasser und die Abführung des behandelten Wassers sowie teilweise das Innere der Anschlusseinrichtung 40, 140 zu sehen sind. Die Anschlussarmaturen 75, 175 sind in der Rückwand der Anschlusseinrichtung 40, 140 angeordnet.

In den Fig. 3 bis 8 ist eine erste Ausführungsform der Vorrichtung (Vorrichtung 1) dargestellt, die als push-turn-Variante bezeichnet wird. Die Kartusche 10 befindet sich gemäß der Fig. 3 bis 5 am Beginn des Einsteckvorgangs.

Die Kartusche 10, 110 besitzt an dem Behälter 12 einen Anschlusskopf 20, der in der hier gezeigten Ausführungsform einen rechteckigen Querschnitt aufweist. Dementsprechend besitzt der Anschlusskopf 20 vier Seitenflächen 22a bis 22d, wobei lediglich die beiden Flächen 22a und 22b zu sehen sind. Die nicht sichtbaren Seitenflächen sind mit gestrichelten Bezugszeichen 22c und 22d gekennzeichnet.

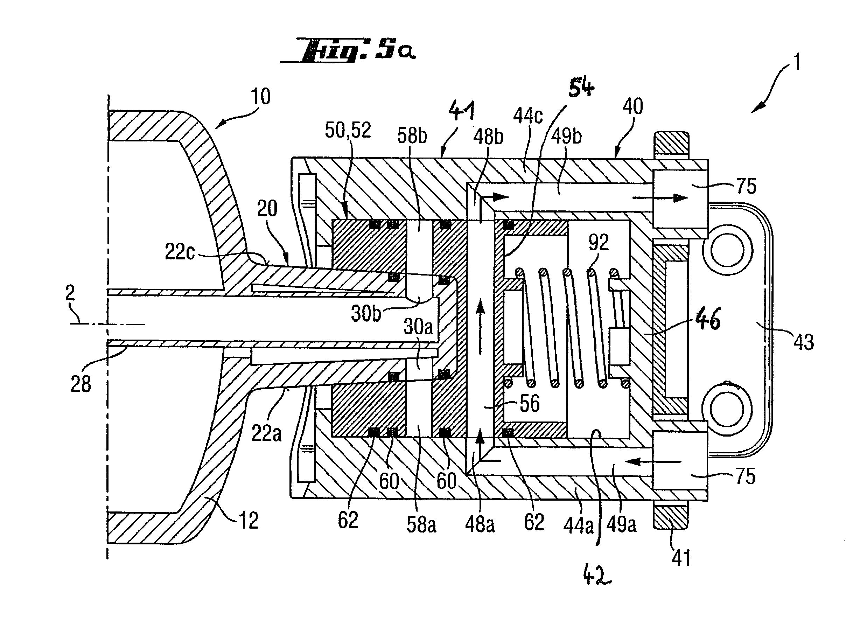

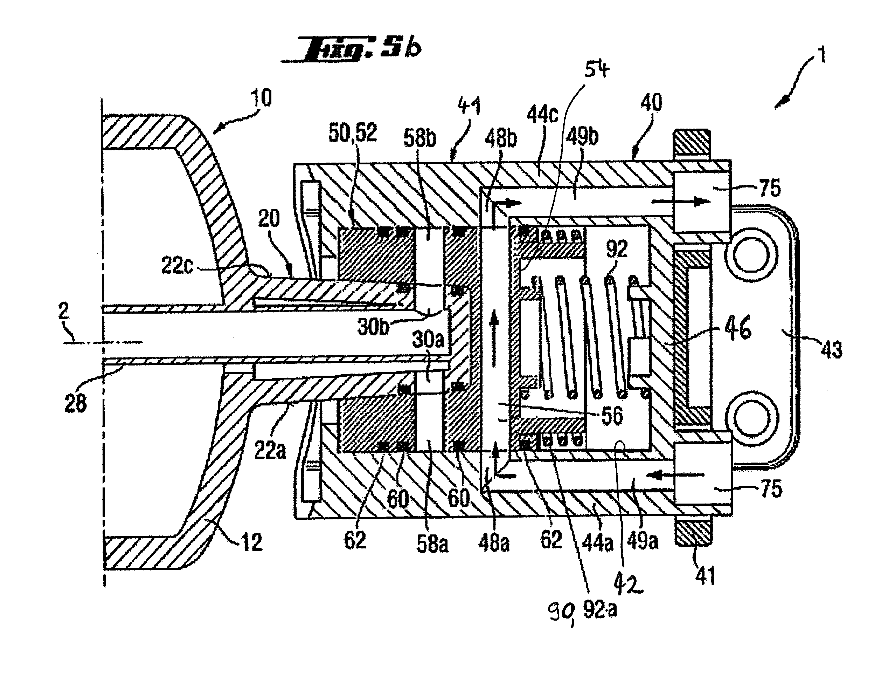

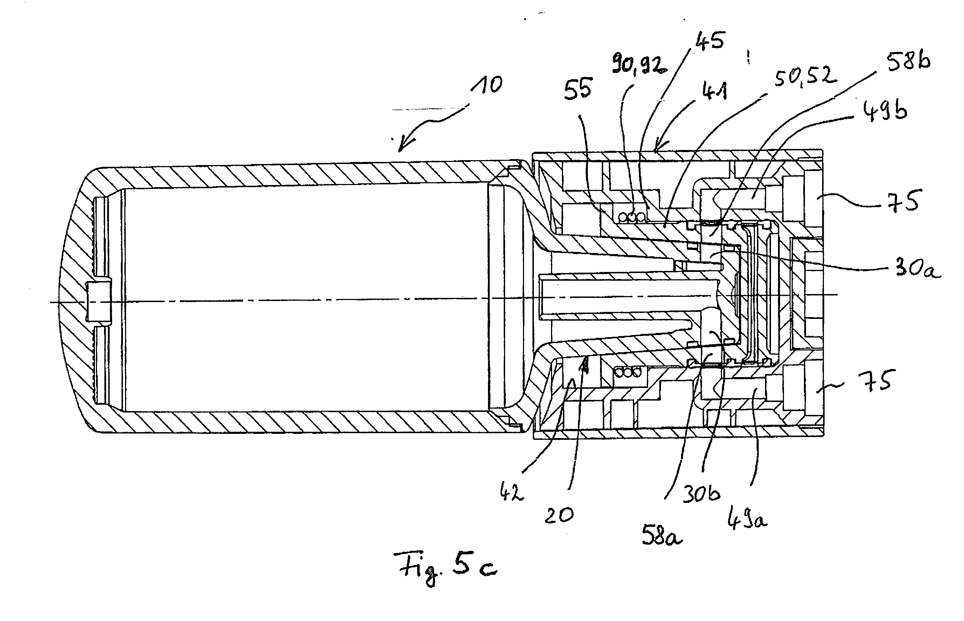

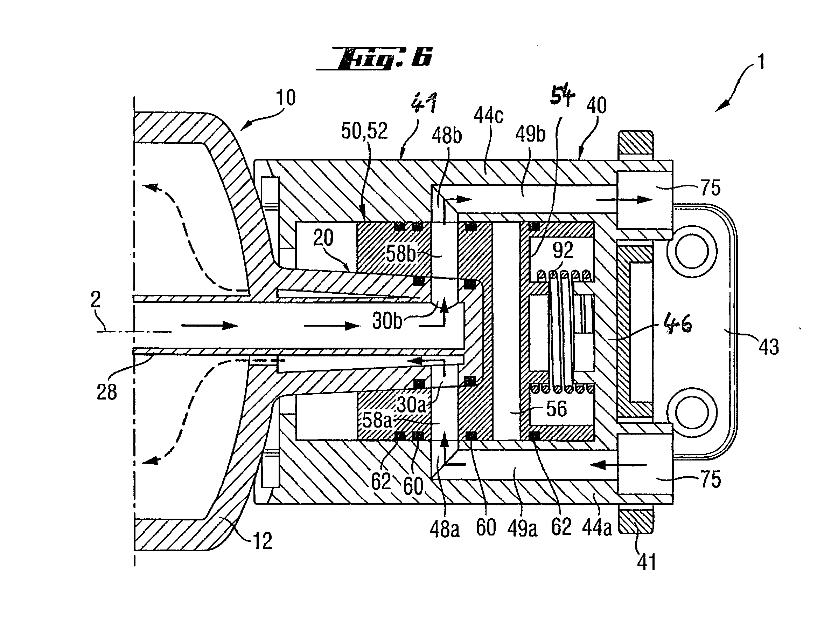

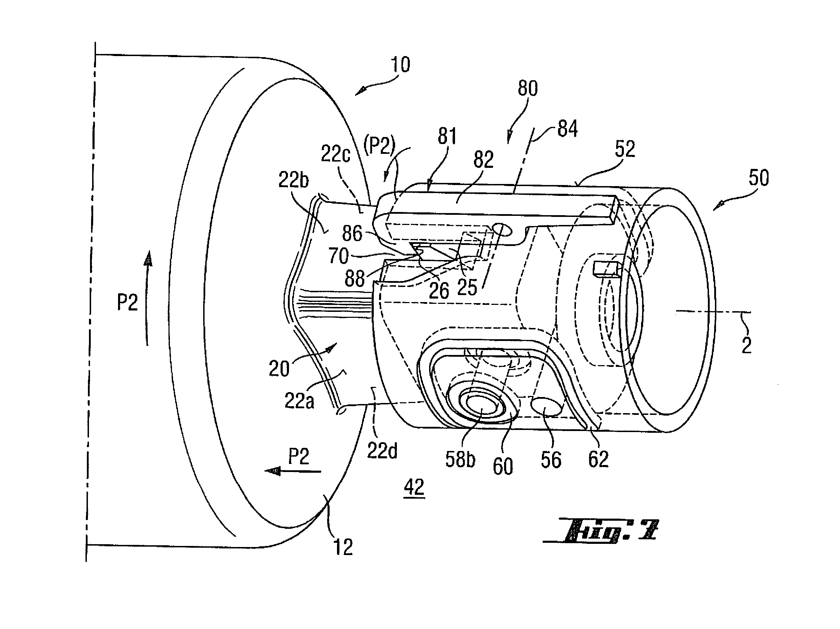

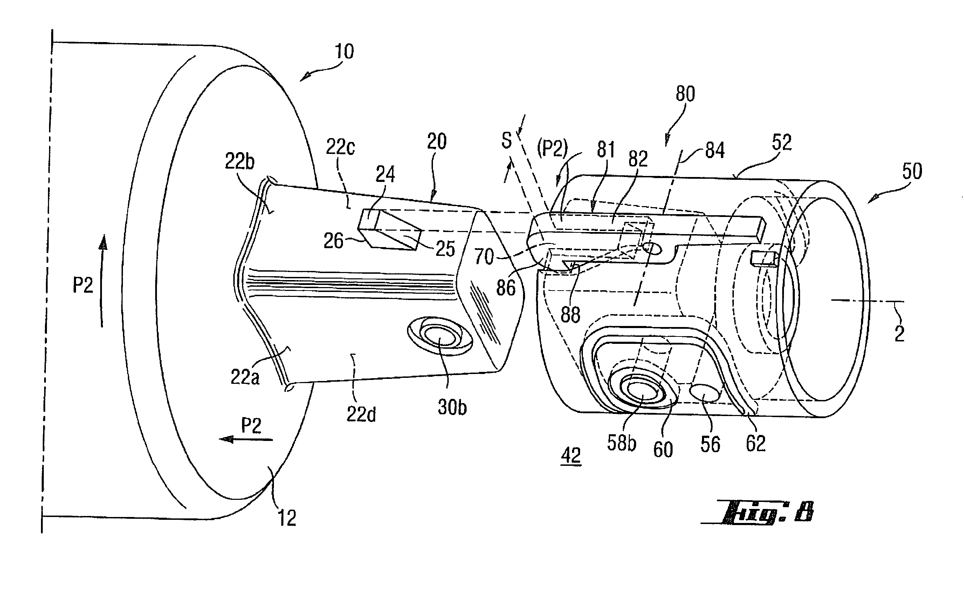

In der Fläche 22a ist eine Eintrittsöffnung 30a dargestellt. In der gegenüberliegenden Seitenfläche 22c befindet sich die Austrittsöffnung 30b (siehe auch Fig. 5a, b, c und 6). An der Fläche 22b ist weiterhin eine Nase 24 als nach außen weisender Vorsprung vorgesehen (siehe auch Fig. 7 und 8). Diese Nase 24 besitzt auf der der Anschlusseinrichtung 40 zugewandten Seite eine Schräge 25 und auf der der Anschlusseinrichtung 40 abgewandten Seite eine im Wesentlichen rechwinklig zur Fläche 22b angeordnete Widerlagerfläche 26. Diese Nase 24 wirkt mit einem Verriegelungselement 81 zusammen, was nachfolgend noch beschrieben wird.

Die Anschlusseinrichtung 40 besitzt ein Gehäuse 41, das an der Montageplatte 43 befestigt ist. Im Inneren des Gehäuses 41 ist eine Aufnahme 42 in Form einer einseitig offenen Kammer mit Seitenwänden 44a-d und Stirnwand 46 vorgesehen. Außerdem sind Kanäle 49a, b im Gehäuse 41 angeordnet, welche sich in axialer Richtung erstrecken und die Anschlussarmaturen 75 mit den Zufluss- und Abflussöffnungen 48a und 48b verbinden, die in die Aufnahme 42 münden.

In der Aufnahme 42 ist eine Ventileinrichtung 50 mit einem Ventilelement 51 in Gestalt einer Hülse 52 in Richtung der Längsachse 2 der Aufnahme 42 verschiebbar angeordnet. Die Hülse 52 besitzt einen Innenraum 68, dessen Querschnitt an den rechteckigen Querschnitt des Anschlusskopfes 20 angepasst ist.

Die Hülse 52 besitzt an der dem Anschlusskopf 20 abgewandten Seite eine topfförmige Vertiefung mit einem Boden 54. Zwischen der Stirnwand 46 der Aufnahme 42 und dem Boden 54 der Hülse 52 ist eine Federeinrichtung 90 vorgesehen, die aus einer Schraubenfeder 92 besteht. Die Schraubenfeder 92 greift mit ihren beiden Enden an ringförmigen Ansätzen am Boden 54 bzw. an der Stirnwand 46 an. Die Schraubenfeder besitzt an einem Ende einen Fixierstift 94a, der in eine entsprechende Ausnehmung 95 in der Stirnwand 46 der Aufnahme 42 eingreift. Am anderen Ende der Schraubenfeder 92 ist ein weiterer Fixierstift 94b angeordnet, der in eine entsprechende Ausnehmung 96 im Boden 54 der Hülse 52 eingreift. Diese Schraubenfeder 92 ist eine Druckfeder und dient gleichzeitig auch als Torsionsfeder.

Wie in Figur 3 in Verbindung mit Figuren 5a und 6 zu sehen ist, weist die Hülse 52 zwei gegenüberliegend angeordnete Bohrungen auf, die sich senkrecht zur Achse 2 erstrecken und die Öffnungen 58a, b bilden, über die die Zuflussöffnung 48a mit der Eintrittsöffnung 30a und die Abflussöffnung 48b mit der Austrittsöffnung 30b verbunden werden, wenn der Anschlusskopf 20 vollständig in der Anschlusseinrichtung 40 eingebracht ist.

Die Hülse 52 weist unter dem Boden 54 eine sich senkrecht zur Längsachse 2 erstreckende Durchgangsbohrung 56 auf, die die Zuflussöffnung 48a mit der Abflussöffnung 48b verbindet. Wasser, das von der unteren Anschlussarmatur 75 über den Kanal 49 zugeführt wird, wird (siehe auch Figuren 5a, b, c) über die Durchgangsbohrung 56 der Öffnung 48b zugeführt wird und über den Kanal 49b im Gehäuse 41 und über die Anschlussarmatur 75 abgeführt. Durch diesen Bypasskanal wird sichergestellt, dass in Ruheposition der Hülse 52 (Figur 5) keine Wasserverluste auftreten, insbesondere kein Wasser unkontrolliert austreten kann, und dass die Versorgung einer nachgeschalteten Maschine mit Wasser aufrechterhalten bleibt.

An der Außenseite der Hülse 52 befindet sich um die Öffnung 58a ein Dichtring 60. Ein weiterer Dichtring 62 ist um den Dichtring 60 und die Öffnung der Durchgangsbohrung 56 gelegt (siehe auch Figur 6). Beide Dichtringe 60, 62 können ein einziges Bauteil bilden, z. B. in Form einer Platte oder eines Dichtkissens mit angeformten Dichtringen 60, 62. Das Bauteil kann beispielsweise aus Polypropylen bestehen, das im Bereich der Dichtringe mit Polytetrafluoräthylen beschichtet ist.

In der Fig. 5b ist ein Längsschnitt durch eine Vorrichtung 1 gemäß einer weiteren Ausführungsform dargestellt. Im Unterschied zur Ausführungsform der Fig. 5a, in der die Feder 90 sowohl als Druck- als auch als Torsionsfeder ausgebildet ist, werden die beiden Funktionen auf zwei Schraubenfedern 92, 92a verteilt. Hierbei ist die Feder 92 als Druckfeder und die Feder 92a als Torsionsfeder ausgebildet. Die Hülse 52 weist im Bereich der topfförmigen Vertiefung einen reduzierten Außendurchmesser auf, so dass die Torsionsfeder 92a in dem ringförmigen Zwischenraum zwischen Hülse 52 und Aufnahme 42 angeordnet werden kann. Ein Ende der Torsionsfeder 92a ist an der Hülse 52 festgelegt, während das andere Ende in einer sich in axialer Richtung erstreckenden Nut in der Wand der Aufnahme 42 in Drehrichtung festgelegt ist (nicht dargestellt). Dadurch bleibt die Festlegung in Drehrichtung erhalten, wenn die Hülse 52 in axialer Richtung verschoben wird.

In der Fig. 5c ist ein Längsschnitt durch eine Vorrichtung 1 gemäß einer weiteren Ausführungsform dargestellt, in der die Federeinrichtung 90 in einem mittleren Bereich der Anschlusseinrichtung 40 angeordnet ist. Im Gegensatz zu den beiden zuvor beschriebenen Ausführungen wird für die Federeinrichtung kein Platz zwischen dem Boden 54 der Hülse 52 und der Stirnfläche 46 benötigt, so dass die Baulänge der Anschlusseinrichtung 40 verkürzt werden konnte.

Die Hülse 52 weist an ihrem, der Kartusche 10 zugewandten Ende einen radial nach außen vorstehenden Ringbund 55 auf. Das Gehäuse 41 besitzt in einem mittleren Bereich der Aufnahme 42 eine Ringschulter 45, so dass die Aufnahme 42 einen durchmessergroßen Abschnitt aufweist, in den der Ringbund 55 eingreift und in axialer Richtung begrenzt beweglich ist. Zwischen Ringbund 55 und der Ringschulter 45 ist die Federeinrichtung 90 in Form einer Schraubenfeder 92 angeordnet, die ebenfalls beide Funktionen (Druckfeder und Torsionsfeder) vereinigt. Die beiden Enden der Schraubenfeder 92 sind an der Ringschulter 45 bzw. dem Ringbund 55 festgelegt.

Wie insbesondere Figuren 7 und 8 zeigen, ist eine Verriegelungseinrichtung 80 vorgesehen, die ein Verriegelungselement 81 in Gestalt einer Sperrklinke 82 aufweist. Diese Sperrklinke 82 erstreckt sich parallel zur Achse 2 und ist in der Seitenwand 44b der Aufnahme 42 mittels Zapfen um eine senkrecht zur Achse 2 sich erstreckende Achse 84 schwenkbar gelagert. Die Sperrklinke 82 ist als zweiarmiger Hebel ausgebildet und weist an dem der Kartusche 10 zugewandten Ende einen Klinkenkopf 86 auf, der in den Innenraum der Aufnahme 42 vorsteht. Der Klinkenkopf 86 besitzt eine Widerlagerfläche 88.

Wenn der Anschlusskopf der Kartusche 10 in den Innenraum 68 der Hülse 52 eingeführt wird (die Bewegungsrichtung ist durch den Pfeil P1 gekennzeichnet), fährt die Rastnase 24 in einen Schlitz 70 der Hülse 52 ein (siehe Figur 3 und Figur 8 mit S als Schlitzbreite), wobei die Schräge 25 die Sperrklinke 82 radial auslenkt bis der Anschlusskopf 20 vollständig eingeführt wird. Die Sperrklinke 82 springt in ihre Ausgangsstellung zurück und hintergreift die Nase 24 an der Widerlagerfläche 26. Der Anschlusskopf 20 ist dann verriegelt (vergl. hierzu auch Figur 7).

Beim Einsteckvorgang wird nicht nur der Anschlusskopf 20 in die Hülse 52 eingeführt, sondern die Hülse 52 wird auch gegen die Wirkung der Schraubenfeder 92 in die Aufnahme 42 eingeschoben. Dadurch werden alle Öffnungen 30a, 48a, 58a sowie 30b, 48b, 58b zur Deckung gebracht (Figuren 6 bzw. 7).

In dieser Endstellung wird das durch den Kanal 49a herangeführte Wasser über die Öffnung 58a der Eintrittsöffnung 30a zugeführt, so dass das Wasser in die Kartusche 10 eingeleitet wird. Das behandelte Wasser wird über ein Innenrohr 28 (Figuren 5 und 6) in gleicher Weise auf der gegenüberliegenden Seite abgeführt. Diese Endstellung, in der sich die Hülse 52 in Arbeitsposition befindet, ist in der Fig. 6 dargestellt. Hierbei ist die Durchgangsbohrung 56 funktionslos.

Um die Kartusche 10 auszutauschen und aus der Aufnahme 42 bzw. dem Innenraum 68 der Hülse 52 zu entfernen, wird die Kartusche 10 in Pfeilrichtung P2 gedreht (vergl. Figur 7). Hierdurch wird gegen die Kraft der auch als Torsionsfeder wirkenden Schraubenfeder 92 gleichzeitig die Hülse 52 gedreht (Figur 7), so dass die Sperrklinke 82 außer Eingriff mit der Nase 24 gebracht wird (Figur 8). Aufgrund der rücktreibenden Kraft der vorgespannten Schraubenfeder 92 wird die Hülse 52 dabei gleichzeitig nach außen gedrückt und die freigegebene Kartusche 10 kann in Achsrichtung 2 herausgezogen werden (Figur 8).

In den Fig. 9 bis 11 ist die zweite Ausführungsform der Vorrichtung (Vorrichtung 101) - sogenannte push-pull-Variante - zum Teil im Schnitt dargestellt, deren innerer Aufbau sich von der Vorrichtung 1 im Wesentlichen durch eine geänderte Ventileinrichtung 150 und eine geänderte Verriegelungseinrichtung 180 unterscheidet. Die Kartusche 110 weist einen Behälter 112 und einen Anschlusskopf 120 mit vier Seitenflächen 122a bis d auf, wobei in zwei gegenüberliegenden Seitenflächen 122a, c eine Eintrittsöffnung 130a und eine Austrittsöffnung 130b angeordnet sind.

Anstelle einer Nase 24 sind zwei Ausnehmungen 126a, b im Kantenbereich der Seitenflächen 122a, b bzw. 122b, c vorgesehen.

Die Anschlusseinrichtung 140 mit Gehäuse 141, Anschlussarmaturen 175, Kanälen 149a, b, Zuflussöffnung 148a und Abflussöffnung 148b sowie Aufnahme 142 der zweiten Ausführungsform entspricht der ersten Ausführungsform. Gleiches gilt für die Durchgangsbohrung 156 im Boden 154 der Hülse 152 und für die Dichtringe 160, 162.

Der wesentliche Unterschied zur ersten Ausführungsform besteht darin, dass zwei Verriegelungselemente 181 vorgesehen sind, die nicht in einer Seitenwand 144a bis d der Aufnahme 142 angeordnet sind, sondern an der Außenseite der Hülse 152. Es handelt sich bei den Verriegelungselementen 181 um Federstäbe 182a, b, die an ihrem der Kartusche 110 abgewandten Ende über Nasen 184a, b im Boden 154 in der Hülse 152 in axialer Richtung festgelegt sind.

Am gegenüberliegenden Ende weisen diese Federstäbe 182a, b jeweils einen Rastkopf 183a, b auf, wobei sich die Rastköpfe 183a, b durch Öffnungen 159a, b in den Innenraum 168 der Hülse 152 erstrecken und nach innen gegenüber den Seitenwänden 164a, c des Innenraumes 168 vorstehen.

Die Seitenwände 144a und 144b der Aufnahme 142 weisen jeweils eine Kulisse 143a, b auf, die im Wesentlichen aus einem Ausweichraum 145a, b und einer Führungsbahn 147a, b besteht.

In der in Fig. 9 gezeigten Stellung befindet sich die Hülse 152 in ihrer Ruheposition und ist für die Aufnahme des Anschlusskopfes 120 bereit. Wenn der Anschlusskopf 120 in Richtung der Längsachse 102 in den Innenraum 168 eingeführt wird, gleiten die Rastköpfe 183a, b an den betreffenden Seitenwänden 122a, b des Anschlusskopfes 120 entlang bis die dort vorgesehenen Ausnehmungen 126a, b erreicht werden. Während dieses Bewegungsablaufs werden die Rastköpfe 183a, b in den Ausweichraum 145a, b zurückbewegt. Gleichzeitig wird beim Einstecken des Anschlusskopfes 120 auch die Hülse 152 in die Aufnahme 142 eingeschoben. Hierbei erreicht jeder Rastkopf 183a, b seine Führungsbahn 147a, b, wodurch die Rastköpfe 183a, b nach innen gedrückt werden und in die Ausnehmungen 126a, b eingreifen. In der Endstellung, wenn die Rastköpfe 183a, b den Endbereich der jeweiligen Führungsbahn 147a, b erreicht haben, ist der Anschlusskopf 120 der Kartusche 110 fixiert.

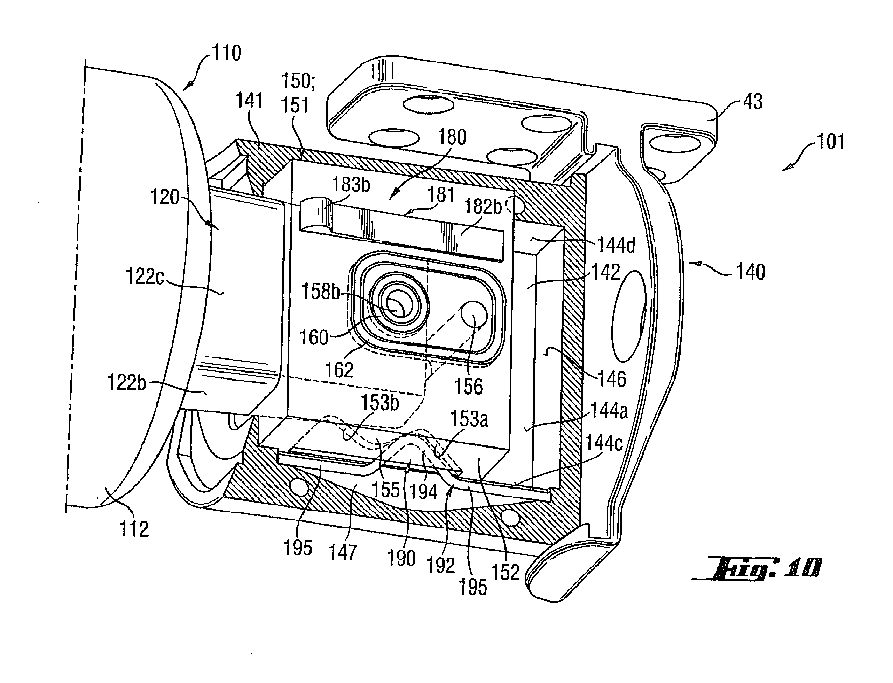

Die Einfahrbewegung der Hülse 152 erfolgt - wie in Fig. 10 dargstellt ist - gegen die Wirkung einer Federeinrichtung 190, die eine Blattfeder 192 aufweist, die mittig einen V-förmigen Abschnitt 194 besitzt. Die Blattfeder 192 ist in der Wand 144c der Aufnahme 142 angeordnet und kann in einen in der Wand 144c befindlichen Freiraum 147 zurückweichen.

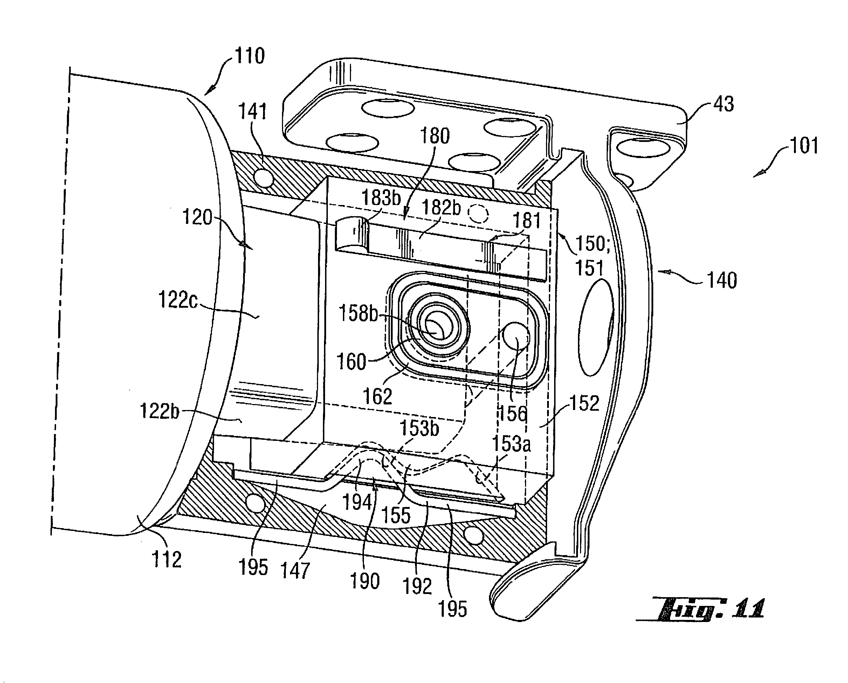

Der V-förmige Abschnitt 194 greift in eine Ausnehmung 153a der Hülse 152 ein. In dieser Stellung wird die Hülse 152 in ihrer Ruheposition fixiert. Beim Einfahren des Anschlusskopfes 120 in die Hülse 152 wird gleichzeitig auch die Hülse 152 weiter in die Aufnahme 142 eingeschoben, so dass die Blattfeder 192 mit ihrem Abschnitt 194 und den anschließenden Schenkeln 195 in den Freiraum 147 eintaucht. Nach Überwindung des Hindernisses 155 greift der V-förmige Abschnitt 194 der Blattfeder 192 in die benachbarte Ausnehmung 153b ein, wie dies in der Fig. 11 dargestellt ist. In der Fig. 11 ist die Endstellung und somit die verriegelte Stellung zu sehen.

Zum Entfernen der Kartusche 110 wird diese mit einer translatorischen Bewegung zurückgezogen, wobei zunächst der Anschlusskopf 120 und die Hülse 152 über die Federstäbe 182a, b und deren Rastköpfe 183a, b miteinander verbunden bleiben, wodurch das Ventilelement 151 durch die Kartusche 110 in seine Ruheposition gezogen wird.

Der V-förmige Abschnitt 194 der Blattfeder 192 verlässt die Ausnehmung 153b in der Hülse 152 und gelangt nach Überwindung des Hindernisses 155 in die benachbarte Ausnehmung 153a.

Während dieser Bewegung der Hülse 152 werden die Rastköpfe 183a, b in den Kulissen 143a, b nach vorne bewegt, bis sie die Ausweichräume 145a, b erreichen und aufgrund der Federwirkung der Federstäbe 182a, b in den betreffenden Ausweichraum 145a, b zurückfedern. Die Rastköpfe 183a, b verlassen die Ausnehmungen 126a, b und geben den Anschlusskopf 120 frei. Die Kartusche 110 kann nunmehr entfernt werden.

### Bezugszeichenliste

- 1: Vorrichtung zur Behandlung von Wasser
- 2: Längsachse

- 10: Kartusche
- 12: Behälter
- 14: Griffstück

- 20: Anschlusskopf
- 22a-d: Seitenfläche
- 24: Nase
- 25: Schräge
- 26: Widerlagerfläche
- 28: Innenrohr

- 30a: Eintrittsöffnung des Anschlusskopfes
- 30b: Austrittsöffnung des Anschlusskopfes

- 40: Anschlusseinrichtung
- 41: Gehäuse
- 42: Aufnahme
- 43: Montageplatte
- 44a-d: Seitenwand
- 45: Ringstufe
- 46: Stirnwand
- 48a: Zuflussöffnung
- 48b: Abflussöffnung
- 49a, b: Kanal

- 50: Ventileinrichtung
- 51: Ventilelement
- 52: Hülse
- 54: Boden der Hülse
- 55: Ringbund
- 56: Durchgangsbohrung
- 58a, b: Öffnung

- 60: Dichtring
- 62: Dichtring
- 68: Innenraum der Hülse

- 70: Schlitz
- 75: Anschlussarmatur

- 80: Verriegelungseinrichtung
- 81: Verriegelungselement
- 82: Sperrklinke
- 84: Achse
- 86: Klinkenkopf
- 88: Widerlagerfläche

- 90: Federeinrichtung
- 92, 92a: Schraubenfeder
- 94a, b: Fixierstift
- 95: Ausnehmung für Fixierstift 94a
- 96: Ausnehmung für Fixierstift 94b

- 101: Filtervorrichtung
- 102: Längsachse

- 110: Kartusche
- 112: Behälter
- 114: Griffstück

- 120: Anschlusskopf
- 122a-d: Seitenfläche
- 126a, b: Ausnehmung

- 130a: Eintrittsöffnung des Anschlusskopfes
- 130b: Austrittsöffnung des Anschlusskopfes

- 140: Anschlusseinrichtung
- 141: Gehäuse
- 142: Aufnahme
- 143a, b: Kulisse
- 144a-d: Seitenwand
- 145a, b: Ausweichraum
- 147: Freiraum
- 147a, b: Führungsbahn
- 148a: Zuflussöffnung
- 148b: Abflussöffnung
- 149a, b: Kanal

- 150: Ventileinrichtung
- 151: Ventilelement
- 152: Hülse
- 153a, b: Ausnehmung
- 154: Boden der Hülse
- 155: Hindernis
- 156: Durchgangsbohrung
- 158a, b: Öffnung
- 159a, b: Öffnung

- 160: Dichtring
- 162: Dichtring
- 164a-d: Seitenwand
- 168: Innenraum der Hülse

- 175: Anschlussarmatur

- 180: Verriegelungseinrichtung
- 181: Verriegelungselement
- 182a, b: Federstab
- 183a, b: Rastkopf
- 184a,b: Nase
- 190: Federeinrichtung
- 192: Blattfeder
- 194: V-förmiger Abschnitt
- 195: Schenkel der Blattfeder 192

- P1: Einführpfeil für Kartusche
- P2: Drehpfeil für Kartusche
- S: Schlitzbreite

## Patentansprüche

1. Vorrichtung zur Behandlung von Wasser mit einer Kartusche (10, 110), die einen Behälter (12, 112) zur Aufnahme von Behandlungsmitteln und einen Anschlusskopf (20, 120) aufweist, der mindestens eine Eintrittsöffnung (30a, 130a) und mindestens eine Austrittsöffnung (30b, 130b) aufweist und
mit einer Anschlusseinrichtung (40, 140), die versehen ist mit
einer Aufnahme (42, 142) für den Anschlusskopf (20, 120), die mindestens eine Zuflussöffnung (48a, 148a) und mindestens eine Abflussöffnung (48b, 148b) aufweist,
eine Ventileinrichtung (50, 150) zum Öffnen und Schließen der Zuflussöffnung (48a, 148a) und
einer Verriegelungseinrichtung (80, 180) zum lösbaren Befestigen der Kartusche (10, 110) an der Anschlusseinrichtung (40, 140),
**dadurch gekennzeichnet, dass** die Aufnahme (42, 142) mindestens eine Seitenwand (44a, b, 144a, b) aufweist, in der die Zufluss- und die Abflussöffnung (48a, b, 148a, b) angeordnet sind und
die Ventileinrichtung (50, 150) ein den Anschlusskopf (20, 120) mindestens teilweise umgreifendes Ventilelement (52, 152) aufweist, das in der Aufnahme (42, 142) beweglich angeordnet ist, und
das Ventilelement (52, 152) mindestens eine Ausnehmung oder eine Öffnung (58a, b, 158a, b) aufweist, welche in einer Endstellung des Anschlusskopfes (20, 120) mit der Eintrittsöffnung (30a, 130a) des Anschlusskopfes (20, 120) und der Zuflussöffnung (48a, 148a) der Aufnahme (42, 142) zur Deckung gebracht wird.

2. Vorrichtung nach Anspruch 1, **dadurch gekennzeichnet, dass** das Ventilelement (52, 152) zwischen mindestens einer Seitenwand (44a, b, 144a, b) der Aufnahme (42, 142) und dem Anschlusskopf (20, 120) angeordnet ist.

3. Vorrichtung nach Anspruch 1 oder 2, **dadurch gekennzeichnet, dass** das Ventilelement (52, 152) in Richtung der Längsachse (2, 102) der Aufnahme (42, 142) verschiebbar und/oder drehbar gelagert ist.

4. Vorrichtung nach einem der Ansprüche 1 bis 3, **dadurch gekennzeichnet, dass** das Ventilelement (52, 152) an der der Stirnwand (46, 146) der Aufnahme (42, 142) zugewandten Seite einen Boden (54, 154) mit einem Durchgangskanal (56, 156) aufweist.

5. Vorrichtung nach einem der Ansprüche 1 bis 4, **dadurch gekennzeichnet, dass** die Eintrittsöffnung und die Austrittsöffnung (30a, b, 130 a, b) des Anschlusskopfes (20, 120) auf gegenüberliegenden Seiten angeordnet sind.

6. Vorrichtung nach einem der Ansprüche 1 bis 5, **dadurch gekennzeichnet, dass** die Verriegelungseinrichtung (80, 180) eine Federeinrichtung (90, 190) aufweist, die zwischen Aufnahme (42, 142) und Ventilelement (52, 152) angeordnet ist.

7. Vorrichtung nach Anspruch 6, **dadurch gekennzeichnet, dass** die Federeinrichtung (90, 190) eine Druckfeder umfasst.

8. Vorrichtung nach einem der Ansprüche 1 bis 7, **dadurch gekennzeichnet, dass** die Verriegelungseinrichtung (80, 180) mindestens ein Verriegelungselement (81, 181) aufweist, das am Anschlusskopf (20, 120) angreift.

9. Vorrichtung nach einem der Ansprüche 1 bis 8, **dadurch gekennzeichnet, dass** der Anschlusskopf (20, 120) eine Ausnehmung (132) und/oder eine Nase (24) aufweist.

10. Vorrichtung nach Anspruch 8 oder 9, **dadurch gekennzeichnet, dass** das Verriegelungselement (81) derart ausgebildet ist, dass es bei einer translatorischen Einsteckbewegung des Anschlusskopfes (20) verriegelt und bei einer Drehbewegung des Anschlusskopfes (20) entriegelt.

11. Vorrichtung nach einem der Ansprüche 8 bis 10, **dadurch gekennzeichnet, dass** das Verriegelungselement (81) eine in einer Seitenwand (44a, b) der Aufnahme (42) angeordnete Sperrklinke (82) ist, die sich parallel zur Längsachse (2) der Aufnahme (42) erstreckt.

12. Vorrichtung nach Anspruch 8 oder 9, **dadurch gekennzeichnet, dass** das Verriegelungselement (181) derart ausgebildet ist, dass es bei einer translatorischen Einsteckbewegung des Anschlusskopfes (120) verriegelt und bei einer entgegen gesetzten translatorischen Bewegung zum Entfernen des Anschlusskopfes (120) entriegelt.

13. Vorrichtung nach Anspruch 12, **dadurch gekennzeichnet, dass** das Verriegelungselement (181) ein Federstab (182) mit Rastkopf (183a, b) ist.

14. Vorrichtung nach Anspruch 13, **dadurch gekennzeichnet, dass** der Federstab (182) an der Außenseite des Ventilelementes (151) angeordnet ist.

15. Vorrichtung nach einem der Ansprüche 13 oder 14, **dadurch gekennzeichnet, dass** der Federstab (182) mit dem Rastkopf (183a, b) in einer in der Seitenwand (144a, b) der Aufnahme (142) angeordneten Kulisse (143a, b) geführt ist.

## Claims

1. A device for treating water, comprising a cartridge (10, 110), which includes a container (12, 112) for receiving treatment agents and a connecting head (20, 120), which has at least one inlet opening (30a, 130a) and at least one outlet opening (30b, 130b), and
a connecting device (40, 140), which is provided with
a holder (42, 142) for the connecting head (20, 120), the holder having at least one inflow opening (48a, 148a) and at least one outflow opening (48b, 148b),
a valve unit (50, 150) for opening and closing the inflow opening (48a, 148a) and
a locking unit (80, 180) for detachably fastening the cartridge (10, 110) to the connecting device (40, 140),
**characterized in that** the holder (42, 142) has at least one side wall (44a, b, 144a, b), in which the inflow opening and the outflow opening (48a, b, 148a, b) are situated, and
the valve unit (50, 150) has a valve element (52, 152), which surrounds the connecting head (20, 120) at least partially and is arranged movably in the holder (42), and
the valve element (52, 152) has at least one recess or opening (58a, b, 158a, b), which in an end position of the connecting head (20, 120) is caused to be aligned with the inlet opening (30a, 130a) of the connecting head (20, 120) and the outflow opening (48a, 148a) of the holder (42, 142).

2. The device according to claim 1, **characterized in that** the valve element (52, 152) is arranged between at least one side wall (44a, b, 144a, b) of the holder (42, 142) and the connecting head (20, 120).

3. The device according to claim 1 or 2, **characterized in that** the valve element (52, 152) is mounted rotatably and/or moveably in the direction of the longitudinal axis (2, 102) of the holder (42, 142).

4. A device according to any one of claims 1 to 3, **characterized in that** the side of the valve element (52, 152) facing the end wall (46, 146) of the holder (42, 142) comprises a bottom (54, 154) having a through-channel (56, 156).

5. A device according to any one of claims 1 to 4, **characterized in that** the inlet opening and the outlet opening (30a, b, 130a, b) of the connecting head (20, 120) are arranged on opposing sides.

6. A device according to any one of claims 1 to 5, **characterized in that** the locking unit (80, 180) comprises a spring unit (90, 190), which is arranged between the holder (42, 142) and the valve element (52, 152).

7. The device according to claim 6, **characterized in that** the spring unit (90, 190) comprises a compression spring.

8. A device according to any one of claims 1 to 7, **characterized in that** the locking unit (80, 180) comprises at least one locking element (81, 181), which engages on the connecting head (20, 120).

9. A device according to any one of claims 1 to 8, **characterized in that** the connecting head (20, 120) comprises a recess (132) and/or a nose (24).

10. The device according to claim 8 or 9, **characterized in that** the locking element (81) is designed so as to lock during a translatory insertion movement of the connecting head (20) and to unlock during a rotary movement of the connecting head (20).

11. A device according to any one of claims 8 to 10, **characterized in that** the locking element (81) is a pawl (82) which is arranged in a side wall (44a, b) of the holder (42) and extends parallel to the longitudinal axis (2) of the holder (42).

12. The device according to claim 8 or 9, **characterized in that** the locking element (181) is designed so as to lock during a translatory insertion movement of the connecting head (120) and to unlock during an opposing translatory movement for removal of the connecting head (120).

13. The device according to claim 12, **characterized in that** the locking element (181) is a spring bar (182) having a detent head (183a, b).

14. The device according to claim 13, **characterized in that** the spring bar (182) is arranged on the outside of the valve element (151).

15. The device according to either claim 13 or 14, **characterized in that** the spring bar (182), together with the detent head (183a, b), is guided in a link (143a, b) arranged in the side wall (144a, b) of the holder(142).

## Revendications

1. Dispositif de traitement d'eau comprenant une cartouche (10, 110), qui présente un récipient (12, 112) servant à recevoir des agents de traitement et une tête de raccordement (20, 120), qui présente au moins un orifice d'entrée (30a, 130a) et au moins un orifice de sortie (30a, 130b), et
comprenant un système de raccordement (40, 140) qui est pourvu
- d'un logement (42, 142) pour la tête de raccordement (20, 120), lequel logement présente au moins un orifice d'arrivée (48a, 148a) et au moins un orifice d'évacuation (48b, 148b),
- d'un système de vanne (50, 150) servant à ouvrir et à fermer l'orifice d'arrivée (48a, 148a), et
- d'un système de verrouillage (80, 80) servant à fixer de manière amovible la cartouche (10, 110) au niveau du système de raccordement (40, 140),
**caractérisé en ce que** le logement (42, 142) présente au moins une paroi latérale (44a, 44b, 144a, 144b), dans laquelle sont disposés les orifices d'arrivée et d'évacuation (48a, 48b, 148a, 148b), et
**en ce que** le système de vanne (50, 150) présente un élément de vanne (52, 152) entourant au moins en partie la tête de raccordement (20, 120), lequel élément de vanne est disposé de manière mobile dans le logement (42, 142), et
**en ce que** l'élément de vanne (52, 152) présente au moins un évidement ou un orifice (58a, 58b, 158a, 158b), qui, lorsque la tête de raccordement (20, 120) se trouve dans une position finale, est superposé à l'orifice d'entrée (30a, 130a) de la tête de raccordement (20, 120) et à l'orifice d'arrivée (48a, 148a) du logement (42, 142).

2. Dispositif selon la revendication 1, **caractérisé en ce que** l'élément de vanne (52, 152) est disposé entre au moins une paroi latérale (44a, 44b, 144a, 144b) du logement (42, 142) et la tête de raccordement (20, 120).

3. Dispositif selon la revendication 1 ou 2, **caractérisé en ce que** l'élément de vanne (52, 152) est logé de manière à pouvoir être déplacé en étant mobile en direction de l'axe longitudinal (2, 102) du logement (42, 142) et/ou de manière à pouvoir tourner.

4. Dispositif selon l'une quelconque des revendications 1 à 3, **caractérisé en ce que** l'élément de vanne (52, 152) présente, au niveau du côté tourné vers la paroi frontale (46, 146) du logement (42, 142), un fond (54, 154) doté d'un canal de passage (56, 156).

5. Dispositif selon l'une quelconque des revendications 1 à 4, **caractérisé en ce que** l'orifice d'entrée et l'orifice de sortie (30a, 30b, 130a, 130b) de la tête de raccordement (20, 120) sont disposés sur des côtés se faisant face.

6. Dispositif selon l'une quelconque des revendications 1 à 5, **caractérisé en ce que** le système de verrouillage (80, 180) présente un système de ressort (90, 190), qui est disposé entre le logement (42, 142) et l'élément de vanne (52,152).

7. Dispositif selon la revendication 6, **caractérisé en ce que** le système de ressort (90, 190) comprend un ressort de pression.

8. Dispositif selon l'une quelconque des revendications 1 à 7, **caractérisé en ce que** le système de verrouillage (80, 180) présente au moins un élément de verrouillage (81, 181), qui vient en prise au niveau de la tête de raccordement (20, 120).

9. Dispositif selon l'une quelconque des revendications 1 à 8, **caractérisé en ce que** la tête de raccordement (20, 120) présente un évidement (132) et/ou un ergot (24).

10. Dispositif selon la revendication 8 ou 9, **caractérisé en ce que** l'élément de verrouillage (81) est réalisé de telle manière qu'il procède au verrouillage dans le cas d'un mouvement d'insertion par translation de la tête de raccordement (20) et au déverrouillage dans le cas d'un mouvement de rotation de la tête de raccordement (20).

11. Dispositif selon l'une quelconque des revendications 8 à 10, **caractérisé en ce que** l'élément de verrouillage (81) est un cliquet d'arrêt (82) disposé dans une paroi latérale (44a, 44b) du logement (42), lequel s'étend de manière parallèle par rapport à l'axe longitudinal (2) du logement (42).

12. Dispositif selon la revendication 8 ou 9, **caractérisé en ce que** l'élément de verrouillage (181) est réalisé de telle manière qu'il procède au verrouillage dans le cas d'un mouvement d'insertion par translation de la tête de raccordement (120) et au déverrouillage lors d'un mouvement de translation opposé servant à éloigner la tête de raccordement (120).

13. Dispositif selon la revendication 12, **caractérisé en ce que** l'élément de verrouillage (181) est une tige de ressort (182) dotée d'une tête d'enclenchement (183a, 183b).

14. Dispositif selon la revendication 13, **caractérisé en ce que** la tige de ressort (182) est disposée au niveau du côté extérieur de l'élément de vanne (151).

15. Dispositif selon l'une quelconque des revendications 13 ou 14, **caractérisé en ce que** la tige de ressort (182) dotée de la tête d'enclenchement (183a, 183b) est guidée dans une coulisse (143a, 143b) disposée dans la paroi latérale (144a, 144b) du logement (142).
